# FASCICULE DE BREVET EUROPEEN

(11) **EP 1 776 299 B1**
(45) Date de publication et mention de la délivrance du brevet: **27.08.2008**
(21) Numéro de dépôt: 05749655.6
(22) Date de dépôt: 12.05.2005
(51) Int. Cl.: B65G 45/16, B65G 45/12

(54) **DISPOSITIF DE NETTOYAGE DE BANDE TRANSPORTEUSE**
FÖRDERBANDREINIGUNGSVORRICHTUNG
CONVEYOR BELT CLEANING DEVICE

(30) Priorité: 13.05.2004 BE 200400243
(43) Date de publication de la demande: 25.04.2007
(73) Titulaire: Technic Gum S.A., 7060 Soignies (BE)
(72) Inventeur: DAVIDTS, Emmanuel, 7190 Ecaussines (BE)
(74) Mandataire: Claeys, Pierre
(86) Numéro de dépôt international: PCT/EP2005/052183
(87) Numéro de publication internationale: WO 2005/113394

(56) Documents cités:
- EP-A1- 1 065 158
- DE-U- 29 503 929
- US-A- 4 269 301
- US-B1- 6 213 287
- US-B1- 6 315 105

## Description

La présente invention se rapporte à un dispositif de nettoyage d'une bande transporteuse par décrassage frontal ou tangentiel comprenant
- un support qui, en position d'utilisation, est stationnaire et s'étend transversalement à la direction longitudinale de la bande transporteuse,
- une lame racleuse fixée de façon détachable sur le support, et
- un moyen d'application de pression capable d'appliquer une pression contre la lame racleuse,

Les bandes convoyeuses sont utilisées sur de nombreux sites industriels tels que des mines, des carrières, des sidérurgies, des cimenteries etc. pour transporter des produits en vrac d'un endroit à un autre. Les produits transportés peuvent être secs ou humides et il est important de disposer d'un système efficace de nettoyage des bandes convoyeuses pendant leur utilisation.

Pour ce nettoyage, il existe plusieurs systèmes de type tangentiel ou frontal. On connaît par exemple un dispositif tel qu'indiqué au début où le moyen d'application de pression est une chambre à air gonflable intercalée entre la lame racleuse et un logement façonné ou fixé sur le support pour y recevoir la chambre à air (v. DE-A-19913361). Ce dispositif nécessite donc un support de construction complexe, ce qui augmente les coûts de fabrication.

On connaît également des dispositifs où une ou plusieurs cavités sont prévues dans le corps de la lame racleuse, pour en augmenter sa souplesse (v. par exemple US-B-6315105 ou DE-U-29503929). Dans certains cas, une tige de matière élastique peut être insérée dans cette cavité, pour amortir la pression exercée par la bande à nettoyer en défilement sur la lame racleuse.

On connaît aussi des dispositifs dont la lame racleuse en matière souple et élastique est conformée de telle manière que, sous la pression de la bande à racler, elle puisse fléchir, puis reprendre sa position de repos initiale lorsque cette pression disparaît (v. par exemple EP-0667831).

Dans, tous ces derniers dispositifs précités, le moyen d'application d'une pression sur la lame racleuse, pour qu'elle s'applique correctement et avec la force requise sur la bande à racler, consiste en un système mécanique permettant de faire tourner le support autour d'un axe transversal à la direction longitudinale de la bande transporteuse. Cette pression peut en effet devoir varier au cours du temps et lors du premier réglage elle peut s'avérer mal ajustée et nécessiter une modification de la position de la lame racleuse par rapport à la bande transporteuse. Tous ces systèmes sont donc à ajuster de l'extérieur et nécessitent une construction mécanique complexe et coûteuse.

Le but de la présente invention est de pallier ces inconvénients. Pour cela, l'invention prévoit un dispositif de nettoyage tel qu'indiqué au début et dans lequel
- la lame racleuse présente une cavité qui s'étend sur toute la largeur de la lame racleuse et est ouverte vers l'extérieur, en la divisant en une partie supérieure et une partie inférieure, la partie supérieure étant capable d'effectuer un mouvement giratoire par rapport à la partie inférieure reliée au support,
- le moyen d'application de pression est logé dans ladite cavité, et applique une pression sur la partie supérieure de la lame racleuse,
- la partie supérieure de la lame racleuse présente une position de repos entre deux positions de giration extrême, une première position de giration extrême dans laquelle elle est plus proche de la partie inférieure que de la position de repos et le moyen d'application de pression est dans un état de compression , et une deuxième position de giration extrême dans laquelle elle est plus éloignée de la partie inférieure que dans la position de repos et le moyen d'application de pression est dans un état d'expansion.

Le dispositif suivant l'invention offre le grand avantage que le moyen d'application de pression et la partie supérieure de la lame racleuse interagissent entre eux de façon totalement indépendante du support auquel est relié la partie inférieure de la lame racleuse. Le support est donc de conception simple et aisé à manipuler et on ne doit plus y bouger après le démarrage du nettoyage. D'autre part, la partie supérieure de la lame peut, dans ce dispositif suivant l'invention, non seulement fléchir depuis sa position de repos sous la pression de la bande transporteuse, en étant assistée par le moyen d'application de pression qui sert à amortir cette pression, mais aussi être déplacée à partir de sa position de repos, dans l'autre sens, vers la bande à racler pour ajuster l'efficacité du raclage. Ces actions sont réalisées depuis l'intérieur de la lame racleuse conformément à un agencement mutuel très simple des différents éléments du dispositif.

Suivant une forme de réalisation de l'invention, le moyen d'application de pression est une chambre à fluide souple, qui peut être reliée à une source de fluide sous pression.

Ce système offre une souplesse d'ajustement qui nécessite uniquement un gonflement ou dégonflement d'une chambre à fluide, sans devoir recourir à des dispositifs mécaniques complexes. La partie supérieure de la lame racleuse entre en mouvement, indépendamment du support qui reste fixe, en direction de la bande transporteuse sous la pression exercée par la chambre à fluide.

Le fluide utilisé est avantageusement de l'air, ou tout autre gaz ou mélange gazeux, ou encore un liquide ou mélange liquide. La pression de fluide peut être modifiée très facilement, sans grande intervention de main-d'oeuvre. On peut utiliser pour cela n'importe quel moyen d'ajustement de la pression d'un fluide à l'intérieur d'une chambre à fluide, par exemple une pompe, un compresseur, etc.

Un autre avantage de la présente invention est que la lame racleuse est clipsée sur le support. En effet, pour assurer la maintenance de ce dispositif de nettoyage de bande transporteuse, l'utilisateur n'a besoin d'aucun outil. Il lui suffit d'arrêter la bande transporteuse le temps de déclipser la lame, de la remplacer et de remettre en marche la bande transporteuse.

La lame racleuse utilisée avec le dispositif de nettoyage de bande transporteuse de l'invention est de préférence composée de segments de lames fixés côte à côte de préférence par clipsage et indépendamment les uns des autres sur le support. Ainsi, la précision du raclage est augmentée puisque les segments se meuvent indépendamment les uns des autres sans risque d'accrocher la bande transporteuse et de l'endommager. En outre, lorsqu'un segment de lame est usé ou endommagé, il peut être remplacé indépendamment des autres segments, ce qui est plus économique et très facile à réaliser.

Dans un des modes de réalisation du dispositif de nettoyage de bande transporteuse de l'invention, la lame racleuse est fabriquée dans une matière élastique.

Cela permet de racler la bande transporteuse de façon optimale puisque la souplesse de la lame racleuse permet de s'adapter de façon parfaite au profil de la bande transporteuse.

Dans un mode de réalisation distinct, la lame racleuse est fabriquée au moins partiellement dans une matière rigide.

On peut évidement prévoir tout moyen d'application de pression approprié autre qu'une chambre à air. On peut par exemple imaginer entre autres des systèmes à vérins ou à solénoïdes.

D'autres détails et particularités de l'invention ressortiront de la description donnée ci-après, à titre non limitatif, et avec référence aux dessins annexés.

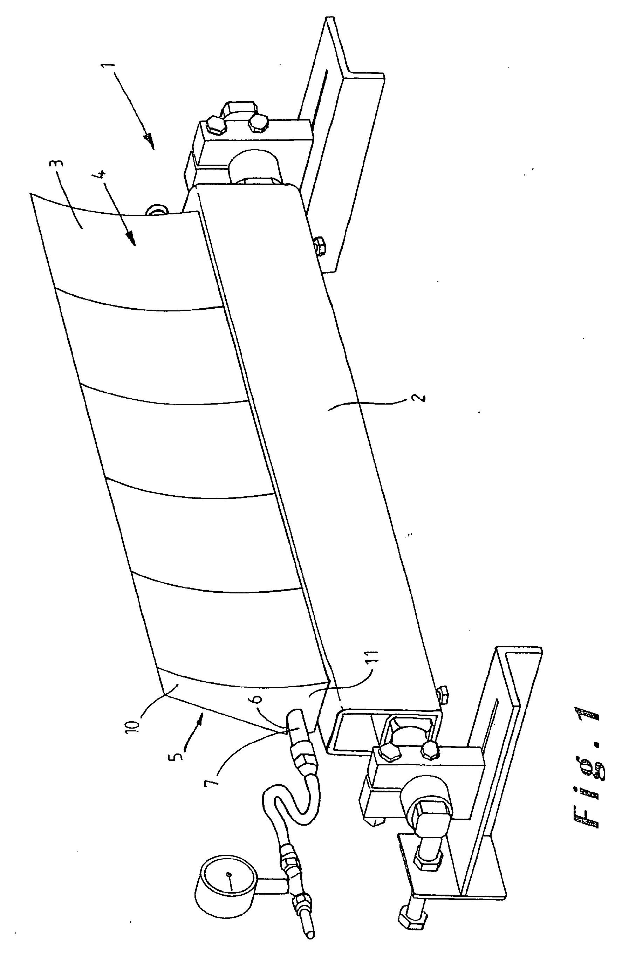

La Fig. 1 est une vue en perspective d'un dispositif de nettoyage de bande transporteuse selon l'invention.
La Fig. 2 illustre la position frontale et la position sous-adjacente d'un dispositif de nettoyage de bande transporteuse selon l'invention, par rapport à une bande transporteuse.
La Fig. 3 illustre le mode de fixation de la lame de nettoyage de bande transporteuse sur le support.
Les Fig. 4a à 4c illustrent la lame racleuse avec la partie supérieure de celle-ci dans sa position de repos et ses deux positions de giration extrême.

Dans un mode de réalisation préféré, le dispositif de nettoyage 1 de bande transporteuse 8 selon l'invention comprend un support métallique 2 sur toute la longueur duquel est disposé un ensemble de segment de lame racleuse 3. Ces segments de lame racleuse 3 présentent une face avant 4 en face de la bande transporteuse et une face arrière 5. Ils sont munis d'une cavité 6 qui est disposée sur leur face arrière 5 et sur toute leur largeur, et qui est ouverte vers l'extérieur. Cette cavité divise les segments de la lame racleuse 3 en deux parties, une partie supérieure 10 et une partie inférieure 11. La partie supérieure 10 est capable d'effectuer un mouvement giratoire par rapport à la partie inférieure 11 reliée au support 2, qui, en position d'utilisation, reste stationnaire. Dans la cavité 6 susdite est inséré un dispositif pour appliquer une pression qui est de préférence une chambre à air 7. Cette chambre à air 7 est reliée à une source d'air comprimé (non illustrée) et la pression est réglable par des moyens d'ajustement de pression usuels et contrôlable, par exemple par manomètre.

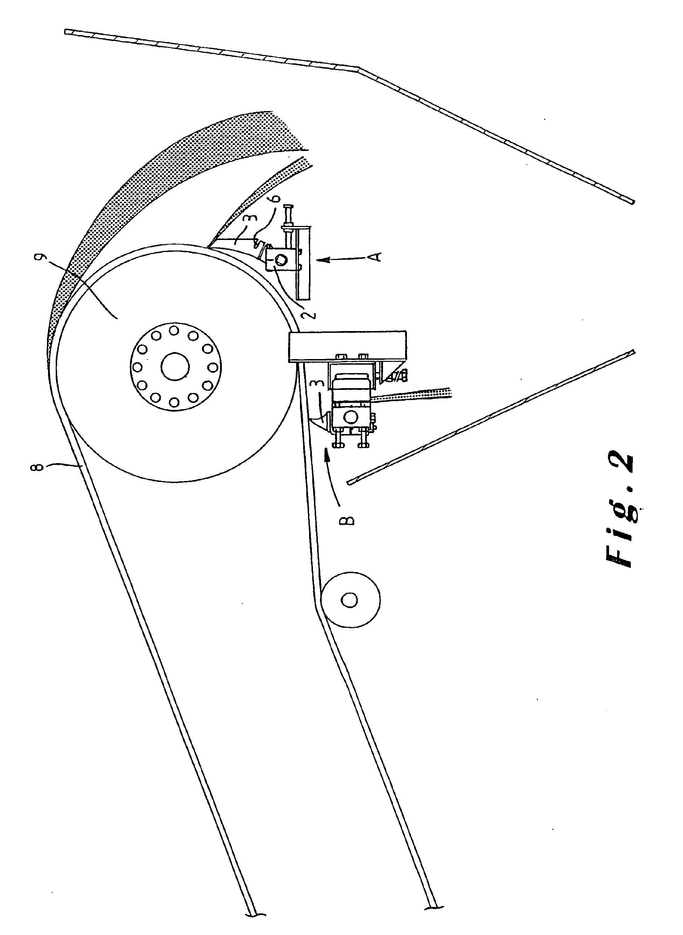

D'une manière générale, il y a deux positions possibles pour un dispositif de nettoyage de bande transporteuse. Celles-ci sont illustrées sur la Fig. 2.

Dans la position sous-adjacente B, le dispositif de nettoyage de bande transporteuse sous-adjacent a l'avantage que la bande transporteuse est en tension et sensiblement rectiligne et néanmoins souple à environ 10 cm du point sortant.

Dans la position frontale A, l'avantage est que le produit raclé à cet endroit par le dispositif de nettoyage de bande transporteuse 8 est versé directement dans la jetée du produit transporté. Cependant, il est difficile de racler convenablement le produit sur la bande transporteuse 8 en position frontale. En effet, il y a des forces en opposition, la bande transporteuse 8 est comprimée contre la virole du tambour 9 et n'a aucune souplesse. Ces contraintes rendent le raclage frontal très difficile.

Le dispositif de nettoyage 1 de bande transporteuse 8 de l'invention surmonte tous ces problèmes grâce à la combinaison de divers éléments. Le dispositif pour appliquer une pression inséré sur toute la longueur de la lame racleuse 3 et au niveau de sa face arrière permet d'appliquer une pression constante et équilibrée.

De plus, la lame racleuse 3 segmentée permet d'affiner l'application de la pression et de racler la bande transporteuse 8 en souplesse. Cette souplesse est également plus importante dû au fait que la lame racleuse 3 elle-même est en matière élastique. Ainsi, le contact de la lame racleuse 3 avec la bande transporteuse 8 est souple, précis et toutes les déformations présentes sur la bande transporteuse 8, ainsi que les joints de jonction, les perforations, la présence d'agrafes métalliques sont absorbés lors du passage sur la lame racleuse 3.

La structure gonflante 7 insérée dans la cavité 6 de la lame racleuse 3 est remplie d'air au moyen d'une pompe ou l'air est stocké dans un réservoir portable. La pression de l'air est de 1 à 6 bar selon la taille du dispositif de nettoyage 1 de bande transporteuse 8 et la nature du produit à racler sur la bande transporteuse 8.

Dans un autre mode de réalisation, la lame racleuse 3 du dispositif de nettoyage 1 de bande transporteuse 8 de l'invention peut être munie, à son extrémité en contact avec la bande transporteuse 8, d'inserts en alumine frittée ou d'autres matières selon le domaine d'application envisagé. La lame peut être souple ou rigide.

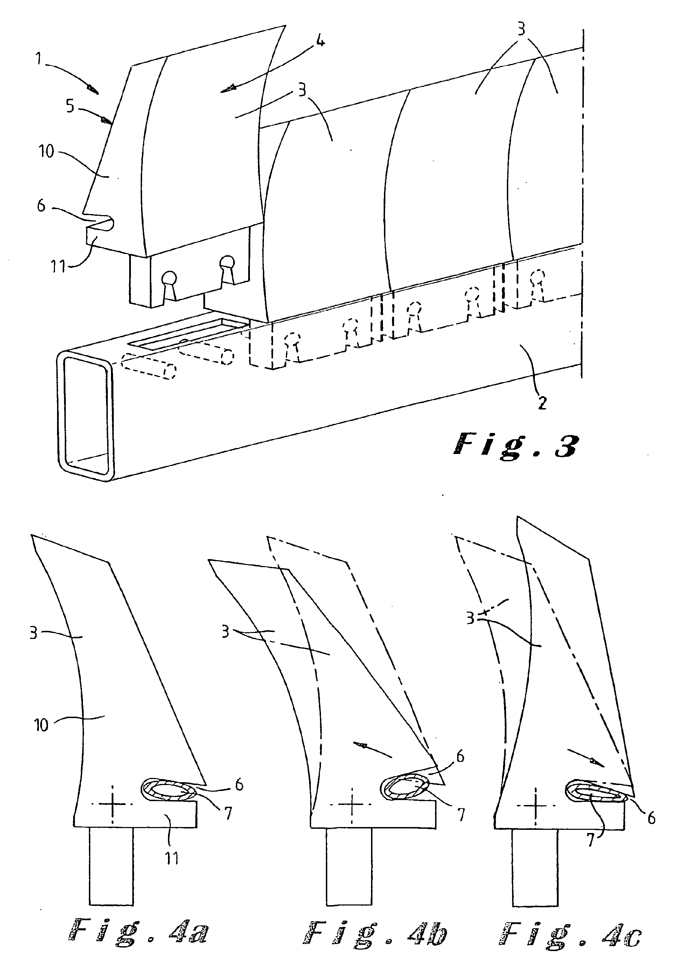

Dans le dispositif de nettoyage 1 de bande transporteuse 8 de l'invention, tel qu'illustré à la figure 3, les segments de lame racleuse 3 sont fixés sur le support 2 métallique sans recourir à des moyens de fixation nécessitant un outillage. En effet, tel qu'illustrée sur la Fig. 3, la lame racleuse 3, qu'elle soit intégrale ou segmentée, est clipsée sur le support 2.

Dans un mode préférentiel de réalisation, la lame racleuse 3 est composée de segments indépendants les uns des autres et clipsés côte à côte sur le support 2. Cela permet une évacuation aisée des matières en évitant un colmatage des produits tout en facilitant la maintenance du dispositif de nettoyage 1 de bande transporteuse 8 puisqu'il suffit de déclipser sans utiliser aucun outil le segment de lame 3 usé ou endommagé et de le remplacer sans devoir démonter les autres segments.

De plus, l'usure de la lame racleuse 3 est compensée automatiquement avec le dispositif de nettoyage 1 de bande transporteuse 8 de l'invention grâce à la chambre à air 7 qui s'étend sur toute la longueur de la lame racleuse 3 et assure donc une pression constante et bien répartie sur la bande transporteuse 8. Cette pression contrôlée permet d'utiliser le dispositif de nettoyage 1 de bande transporteuse 8 avec des bandes convoyeuses 8 qui sont détériorées, agrafées ou assemblées mécaniquement en assurant un décrassage très efficace de telles bandes convoyeuses 8.

La forme du dispositif de nettoyage 1 de bande transporteuse 8 de l'invention le rend peu encombrant et facilite l'écoulement des produits raclés tout en garantissant une parfaite étanchéité.

Les Fig. 4a à 4c illustrent le mouvement giratoire que peut opérer une lame racleuse 3 du dispositif de nettoyage 1 de bande transporteuse 8 de l'invention. La figure 4a montre la partie supérieure 10 de la lame 3 en position de repos. Lorsqu'une pression est exercée par gonflement de la chambre à air 7 disposée dans la cavité 6 de la lame racleuse 3 (position d'expansion), la partie supérieure 10 effectue un mouvement giratoire dans le sens de la flèche illustrée sur la figure 4b, avec inclinaison vers l'avant de la lame racleuse 3, ce qui assure un contact optimal avec la bande transporteuse 8 devant être raclée. La souplesse de la lame racleuse 3 due à sa matière élastique participe aussi à un meilleur contact et à une compensation des irrégularités de relief de la bande transporteuse 8 à racler.

Sous l'effet d'une pression exercée par la bande transporteuse, la partie supérieure 10 de la lame peut être entraînée suivant un mouvement giratoire dans le sens de la flèche illustrée sur la figure 4c. Dans cette position, la chambre à air est écrasée entre la partie supérieure 10 et la partie inférieure 11 (état de compression) et la chambre à air amortit donc les effets de cette pression.

Il est également visible sur les Fig. 4a à 4c que la lame racleuse 3 effectue un mouvement qui n'entraîne aucun mouvement du support lui-même. En effet, l'interaction entre la partie supérieure 10 de la lame racleuse 3 et la chambre à air 7 est indépendante du support 2 qui reste complètement inerte et ne participe aucunement à cette interaction.

## Revendications

1. Dispositif de nettoyage (1) d'une bande transporteuse (8) par décrassage frontal ou tangentiel comprenant
- un support (2) qui, en position d'utilisation, est stationnaire et s'étend transversalement à la direction longitudinale de la bande transporteuse (8),
- une lame racleuse (3) fixée de façon détachable sur le support (2) et qui présente une cavité (6) qui s'étend sur toute la largeur de la lame racleuse et est ouverte vers l'extérieur, en la divisant en une partie supérieure (10) et une partie inférieure (11), la partie supérieure étant capable d'effectuer un mouvement giratoire par rapport à la partie inférieure reliée au support, et
**caractérisé en ce qu'**il comporte en outre
- un moyen d'application de pression (7) capable d'appliquer une pression contre la lame racleuse, lequel moyen d'application de pression (7) étant une chambre à fluide logée dans ladite cavité (6) et appliquant une pression sur la partie supérieure (10) de la lame racleuse (3), et
- des moyens d'ajustement de la pression du fluide à l'intérieur de la chambre à fluide,
et **en ce que** la partie supérieure (10) de la lame racleuse présente une position de repos entre deux positions de giration extrême, une première position de giration extrême dans laquelle elle est plus proche de la partie inférieure (11 ) que de la position de repos et le moyen d'application de pression (7) est dans un état de compression, et une deuxième position de giration extrême dans laquelle elle est plus éloignée de la partie inférieure que dans la position de repos et le moyen d'application de pression (7) est dans un état d'expansion.

2. Dispositif de nettoyage (1) suivant la revendication 1, **caractérisé en ce que** le moyen d'application de pression (7) est une chambre à fluide souple, qui peut être reliée à une source de fluide sous pression.

3. Dispositif de nettoyage (1) de bande transporteuse (8) selon la revendication 1 ou 2, dans lequel la lame racleuse (3) est clipsée sur le support (2).

4. Dispositif de nettoyage (1) de bande transporteuse (8) selon l'une des revendications précédentes, dans lequel la lame racleuse (3) est composée de segments de lame fixés côte à côte et indépendamment les uns des autres-sur le support (2).

5. Dispositif de nettoyage (1) de bande transporteuse (8) selon l'une des revendications précédentes, dans lequel la lame racleuse (3) est faite au moins partiellement d'une matière élastique.

6. Dispositif de nettoyage (1) de bande transporteuse (8) selon l'une des revendications précédentes, dans lequel la lame racleuse (3) est faite au moins partiellement d'une matière rigide.

7. Dispositif suivant l'une quelconque des revendications 1 à 6, **caractérisée en ce que** le fluide est un gaz, un liquide ou un mélange gazeux ou liquide, tel que de l'air.

8. Utilisation d'un dispositif de nettoyage (1) selon les revendications 1 à 7 pour le décrassage frontal, tangentiel ou sous-adjacent d'une bande transporteuse (8).

## Claims

1. Device (1) for cleaning a conveyor belt (8) by frontal or tangential dirt removal, comprising
- a support (2) that, in the position of use, is stationary and extends transversally to the longitudinal direction of the conveyor belt (8),
- a scraper blade (3) that is detachably fixed to the support (2) and that has a cavity (6) that extends over the entire width of the scraper blade and is open towards the outside, dividing it into a top part (10) and a bottom part (11), the top part being capable of effecting a gyratory movement with respect to the bottom part connected to the support, and
**characterised in that** it also comprises
- a pressure application means (7) capable of applying a pressure against the scraper blade, the said pressure application means (7) being a fluid chamber housed in the said cavity (6) and applying a pressure to the top part (10) of the scraper blade (3), and
- means of adjusting the pressure of the fluid inside the fluid chamber,
and **in that** the top part (10) of the scraper blade has an idle position between two extreme gyration positions, a first extreme gyration position in which it is closer to the bottom part (11) then the idle position and the pressure application means (7) is in a state of compression, and a second extreme gyration position in which it is further away from the bottom part than in the idle position and the pressure application means (7) is in a state of expansion.

2. Cleaning device (1) according to claim 1, **characterised in that** the pressure application means (7) is a flexible fluid chamber that can be connected to a pressurised fluid source.

3. Device (1) for cleaning a conveyor belt (8) according to claim 1 or 2, in which the scraper blade (3) is clipped onto the support (2).

4. Device (1) for cleaning a conveyor belt (8) according to one of the preceding claims, in which the scraper blade (3) is composed of blade segments fixed side by side and independently of each other on the support (2).

5. Device (1) for cleaning a conveyor belt (8) according to one of the preceding claims, in which the scraper blade (3) is at least partially made from an elastic material.

6. Device (1) for cleaning a conveyor belt (8) according to one of the preceding claims, in which the scraper blade (3) is at least partially made from a rigid material.

7. Device according to any one of claims 1 to 6, **characterised in that** the fluid is a gas, a liquid or a gaseous or liquid mixture, such as air.

8. Use of a cleaning device (1) according to claims 1 to 7 for frontal, tangential or subjacent dirt removal from a conveyor belt (8).

## Patentansprüche

1. Reinigungsvorrichtung (1) eines Förderbands (8) durch stirnseitiges oder tangentiales Schrubben, umfassend:
- einen Träger (2), der in Gebrauchsstellung stationär ist und sich quer zu der Längsrichtung des Förderbands (8) erstreckt,
- eine Abstreifklinge (3), die abnehmbar auf dem Träger (2) befestigt ist und einen Hohlraum (6) aufweist, der sich über die ganze Breite der Abstreifklinge erstreckt und nach außen offen ist, indem die Abstreifklinge in einen oberen Teil (10) und einen unteren Teil (11) geteilt wird, wobei der obere Teil eine Drehbewegung in Bezug auf den unteren Teil, der mit dem Träger verbunden ist, ausführen kann, und
**dadurch gekennzeichnet, dass** sie ferner Folgendes aufweist
- ein Mittel zum Druckanlegen (7), das einen Druck gegen die Abstreifklinge anlegen kann, wobei das Druckanlegemittel (7) eine Kammer mit Fluid ist, die in dem Hohlraum (6) untergebracht ist und einen Druck auf den oberen Teil (10) der Abstreifklinge (3) ausübt, und
- Einstellmittel für den Druck des Fluids im Inneren der Fluidkammer,
und dass der obere Teil (10) der Abstreifklinge eine Ruhestellung zwischen zwei Enddrehstellungen aufweist, eine erste Enddrehstellung, in der er dem unteren Teil (11) näher ist als der Ruhestellung, und das Druckanlegemittel (7) in einem Kompressionszustand ist, und eine zweite Enddrehstellung, in der er von dem unteren Teil weiter entfernt ist als in der Ruhestellung, und in der das Druckanlegemittel (7) in einem Dehnungszustand ist.

2. Reinigungsvorrichtung (1) nach Anspruch 1, **dadurch gekennzeichnet, dass** das Druckanlegemittel (7) eine biegsame Fluidkammer ist, die mit einer Fluidquelle unter Druck verbunden werden kann.

3. Reinigungsvorrichtung (1) für ein Förderband (8) nach Anspruch 1 oder 2, bei der die Abstreifklinge (3) auf den Träger (2) geclipst ist.

4. Reinigungsvorrichtung (1) für Förderband (8) nach einem der vorhergehenden Ansprüche, bei dem die Abstreifklinge (3) aus Klingensegmenten besteht, die nebeneinander und unabhängig voneinander auf dem Träger (2) befestigt sind.

5. Reinigungsvorrichtung (1) für Förderband (8) nach einem der vorhergehenden Ansprüche, bei der die Abstreifklinge (3) zumindest teilweise aus einem elastischen Material besteht.

6. Reinigungsvorrichtung (1) für Förderband (8) nach einem der vorhergehenden Ansprüche, bei der die Abstreifklinge (3) zumindest teilweise aus einem starren Material besteht.

7. Vorrichtung nach einem der Ansprüche 1 bis 6, **dadurch gekennzeichnet, dass** das Fluid ein Gas, eine Flüssigkeit oder ein gasförmiges oder flüssiges Gemisch, wie zum Beispiel Luft ist.

8. Einsatz einer Reinigungsvorrichtung (1) nach den Ansprüchen 1 bis 7 zum frontalen, tangentialen oder Schrubben unterhalb eines Förderbands (8).
